(19) Europäisches Patentamt
European Patent Office
Office européen des brevets

(11) **EP 4 672 554 A2**

(12) **EUROPÄISCHE PATENTANMELDUNG**

(43) Veröffentlichungstag:
**31.12.2025 Patentblatt 2026/01**

(21) Anmeldenummer: **25180366.4**

(22) Anmeldetag: **03.06.2025**

(51) Internationale Patentklassifikation (IPC):
***H02J 50/10** (2016.01)* ***H02J 50/40** (2016.01)*
***H02J 50/80** (2016.01)* ***H02J 50/90** (2016.01)*

(52) Gemeinsame Patentklassifikation (CPC):
**H02J 50/10; H02J 50/40; H02J 50/80; H02J 50/90**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH LA MA MD TN**

(30) Priorität: **05.06.2024 DE 102024115575**

(71) Anmelder: **Universität Stuttgart Körperschaft des Öffentlichen Rechts**
**70174 Stuttgart (DE)**

(72) Erfinder:
- **Noeren, Jannis**
**70174 Stuttgart (DE)**
- **Elbracht, Lukas**
**70174 Stuttgart (DE)**

(74) Vertreter: **RGTH**
**Patentanwälte PartGmbB**
**Neuer Wall 10**
**20354 Hamburg (DE)**

(54) **VERFAHREN ZUM BESTIMMEN EINER RELATIVEN POSITION MINDESTENS EINES ZWEITEN PRIMÄRSEITIGEN MODULS ZU EINEM ERSTEN PRIMÄRSEITIGEN MODUL EINER VORRICHTUNG ZUR KONTAKTLOSEN ENERGIEÜBERTRAGUNG SOWIE VORRICHTUNG ZUR KONTAKTLOSEN ENERGIEÜBERTRAGUNG**

(57) Es wird ein Verfahren (100) zum Bestimmen einer relativen Position mindestens eines zweiten primärseitigen Moduls (12) zu einem ersten primärseitigen Modul (11) einer Vorrichtung (10) zur kontaktlosen Energieübertragung vorgeschlagen, wobei das erste Modul (11) und das zweite Modul (12) jeweils mindestens eine Spule umfassen. Das Verfahren (100) umfasst ein Erzeugen (101) eines Signals mit einem Wechselanteil in mindestens einer Spule des ersten Moduls (11) zur Induktion (102) einer Spannung in mindestens einer Spule des zweiten Moduls (12) und ein Feststellen (103) der induzierten Spannung in der Spule des zweiten Moduls.

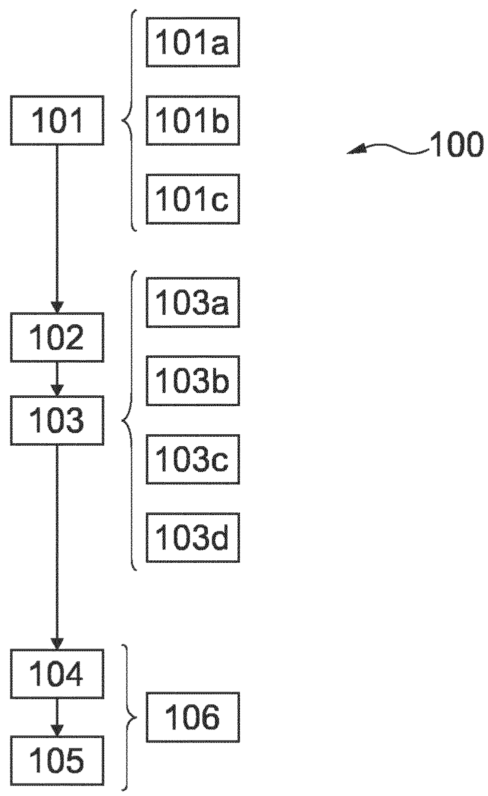


Fig. 1

EP 4 672 554 A2

**Beschreibung**

Die vorliegende Erfindung betrifft ein Verfahren zum Bestimmen einer relativen Position mindestens eines zweiten primärseitigen Moduls zu einem ersten primärseitigen Modul einer Vorrichtung zur kontaktlosen Energieübertragung sowie eine Vorrichtung zur kontaktlosen Energieübertragung nach den unabhängigen Ansprüchen.

Vorrichtungen zur kontaktlosen Energieübertragung sind aus dem Stand der Technik grundsätzlich bekannt. Diese umfassen beispielsweise mehrere primärseitige Module, die jeweils mindestens eine Spule umfassen. Diese Spulen sind für die induktive Energieübertragung ausgebildet. Aus dem Stand der Technik ist ferner die Notwendigkeit bekannt, die genaue Einbaulage und / oder Anordnung der Spulen/Module zu kennen. Hierfür gibt es dedizierte Schnittstellen oder es ist eine manuelle Dokumentation der Einbaulage der Module notwendig, wobei beide Ansätze kostenintensiv und zeitaufwendig sind.

Der vorliegenden Erfindung liegt die Aufgabe zugrunde, ein Verfahren zum Bestimmen einer relativen Position verschiedener primärseitiger Module derart zu verbessert, dass dieses möglichst automatisiert mit geringstmöglichem Aufwand und Kosten durchgeführt werden kann.

Gelöst wird die vorgenannte Aufgabe durch ein Verfahren zur Bestimmung einer relativen Position mindestens eines zweiten primärseitigen Moduls zu einem ersten primärseitigen Modul einer Vorrichtung zur kontaktlosen Energieübertragung. Dabei umfassen das erste und das zweite primärseitige Modul jeweils mindestens eine Spule. Vorzugsweise umfassen beide Module mehrere Spulen. Bei dem Verfahren handelt es sich vor allem um ein Verfahren zur kontaktlosen Energieübertragung.

Die primärseitigen Spulen dienen vor allem zur induktiven und somit kontaktlosen Energieübertragung. Dabei wird Nutzenergie von mindestens einer primärseitigen Spule zu mindestens einer Spule der Sekundärseite, sprich des Empfängers, übertragen oder auch andersherum. Bei der Nutzenergie handelt es sich um die Energie, die auf der energieaufnehmenden Seite beispielsweise zur Verrichtung von Arbeit genutzt werden kann. Sie kann auch als Nutzsignal verstanden werden.

Das Verfahren umfasst ein Erzeugen eines Signals mit einem Wechselanteil in mindestens einer Spule des ersten Moduls zur Induktion einer Spannung in mindestens einer Spule des zweiten Moduls und ein Feststellen der induzierten Spannung in der Spule des zweiten Moduls. Vorzugsweise wird festgestellt, ob eine Spannung induziert wurde und diese dann auch ermittelt. Das Verfahren ist vor allem computer-implementiert. Unter dem Begriff "Feststellen" kann eine Detektion verstanden werden.

Bei dem Signal mit dem Wechselanteil kann es sich um ein periodisches Wechselsignal, beispielsweise ein Wechselspannungssignal, handeln. Dies kann durch ein Wechselstromsignal ausgelöst werden. Ein Wechselanteil kann jedoch bereits eine unstetige Änderung des Signals sein, bspw. ein Sprung, um eine entsprechende Induktion auszulösen. In anderen Worten wird die Spule auf Basis des Signals für zumindest eine Zeitspanne betrieben bzw. aktiviert. Das Signal ist kleiner als die Nutzenergie, vorzugsweise beträgt die Amplitude des Signals zwischen 1 % und 10 % der Amplitude der Nutzenergie.

Auf Basis des Signals erzeugt die Spule eine induzierte Spannung in der Spule des zweiten Moduls. Diese Spule wird im Folgenden auch als Sendespule bezeichnet, da sie das Signal aussendet. Im Detail ändert sich der magnetische Fluss in der Spule des zweiten Moduls, wenn diese in ausreichender räumlicher Nachbarschaft angeordnet ist. In anderen Worten kann auf diese Weise eine magnetische Kopplung zwischen den Spulen festgestellt werden. Die magnetische Kopplung ist als induktive Kopplung zu verstehen, und zwar als nennenswerte gegenseitige magnetische Beeinflussung zwischen den Spulen.

Die in der Spule des zweiten Moduls induzierte Spannung wird festgestellt, wobei auf Basis dieser auf die relative Position der beiden Spulen zueinander und somit auch der beiden Module zueinander Rückschlüsse getroffen werden können.

Vorzugsweise kann das Verfahren ein Erzeugen eines jeweiligen Signals mit einem Wechselanteil in jeder primärseitigen Spule umfassen, wobei dann in jeder primärseitigen Spule die jeweils induzierte Spannung festgestellt wird. Jede Spule dient somit gleichzeitig als Sendespule und Empfangsspule. Besteht keine magnetische Kopplung zwischen einer Sendespule und einer Empfangsspule wird keine Spannung festgellt. Umfasst beispielsweise das erste primärseitige Modul vier Spulen und das zweite primärseitige Modul vier Spulen, bedeutet dies, dass in allen acht Spulen ein Signal mit einem Wechselanteil erzeugt wird und auch in allen acht Spulen jeweils festgestellt wird, ob auf Basis einer der Signale eine induzierte Spannung vorliegt. Es kann beispielsweise eine Schwelle definiert werden, ab der festgelegt wird, dass eine induzierte Spannung vorliegt. In anderen Worten kann eine Mindestspannung definiert werden, oberhalb derer eine induzierte Spannung vorliegt. Die Schwelle kann bspw. die Hälfte der zu erwartenden induzierten Spannung bei direkt angrenzenden Spulen entsprechen. Diese Schwelle kann vordefiniert sein.

Vorzugsweise können die Signale in den verschiedenen Spulen zeitlich sequentiell erzeugt werden. Die Signale, die an sämtlichen primärseitigen Spulen erzeugt werden, werden somit zeitlich nacheinander erzeugt. Die Signale überschneiden sich somit zeitlich nicht. Dies dient dazu, jede induzierte Spannung jeder Spule der entsprechenden Sendespule zuordnen zu können.

Statt einer sequentiellen Erzeugung der Signale können die Signale gleichzeitig erzeugt werden, wobei sich die Signale dann unterscheiden. Ein solcher Ansatz macht das Verfahren besonders effektiv. Die Unterscheidung dient dazu, jeder induzierten Spannung, die festgestellt wird, einer entsprechenden Sendespule zuordnen zu können. Umfasst somit das erste Modul beispielsweise vier Spulen und das zweite Modul beispielsweise ebenfalls vier Spulen, wird an allen acht Spulen gleichzeitig ein jeweiliges Signal mit einem Wechselanteil erzeugt. Auch wird gleichzeitig an allen Spulen festgestellt, ob eine Spannung induziert wurde. Um nun zu unterscheiden, welche Sendespule zu welcher induzierten Spannung geführt hat, müssen die Signale unterscheidbar sein.

Die Signale können sich beispielsweise hinsichtlich deren Frequenzen unterscheiden. Beispielweise kann jeder Spule eine diskrete Frequenz zugeordnet sein. Insbesondere kann ein periodisches Wechselspannungsbeziehungsweise Wechselstromsignal eingesetzt werden, das je nach Spule unterschiedliche Frequenzen aufweisen kann. Insbesondere können sämtliche Frequenzen orthogonal zueinander sein. Vor allem können sämtliche Signale orthogonal zueinander sein. Dies dient dazu, die induzierten Spannungen bei einer Umwandlung in den Frequenzraum möglichst scharf und gut voneinander unterscheiden zu können. Insbesondere wird orthogonales Frequency-Division Multiplexing (OFDM) verwendet. In anderen Worten wird das Funktionsprinzip des OFDM verwendet. So entsprechen die orthogonalen Signale den Trägern im Sinne des OFDM.

Die Frequenzen weisen vorzugsweise ein rationales, vorzugsweise zumindest im Wesentlichen gebrochenrationales, Verhältnis zueinander auf In anderen Worten wird das gebrochene-rationale Verhältnis zumindest annährend erfüllt.

Orthogonalität besteht vorzugsweise genau dann, wenn gilt:

$$f_v = \frac{v}{T}, \quad f_w = \frac{w}{T}, \quad w, v \in \mathbb{N}$$

Wenn v und w aus der Menge der natürlichen Zahlen stammen, haben die beiden Frequenzen ein gebrochen rationales Verhältnis. Der Betrachtungszeitraum der Signale im Zeitbereich (für die anschließende Transformation in den Frequenzbereich) ist hier mit T bezeichnet. Wenn T bspw. 1ms ist, v = 100 und w = 120, sind die beiden orthogonalen Signale 100 kHz bzw. 120 kHz. Für diese drei Bedingungen sind die erfassten Signale zueinander orthogonal und beeinflussen sich nicht gegenseitig. Folglich können die Signale sehr scharf voneinander unterschieden werden, auch wenn beide Signale eine sehr unterschiedliche Amplitude aufweisen.

Das Verfahren kann vor oder während der Übertragung von Nutzenergie durchgeführt werden. Wird gleichzeitig Nutzenergie übertragen, kann die dazu verwendete Frequenz ebenfalls - wie oben beschrieben - unterscheidbar zur Signalfrequenz sein.

Vorzugsweise wird die induzierte Spannung in einer Spule indirekt durch Messung eines Stroms mittels eines Stromsensors festgestellt. Es kann somit nicht direkt die induzierte Spannung, sondern der ausgelöste Strom gemessen werden, aus der auf die induzierte Spannung geschlossen werden kann. Alternativ kann ferner direkt die induzierte Spannung durch eine Spannungsmessung gemessen werden.

Vorzugsweise kann jeder Spule ein eigener Inverter zugeordnet sein, wobei mittels des Stromsensors der Strom an einem Ausgang des Inverters der jeweiligen Spule gemessen werden kann. Ferner können einem Modul und somit sämtlichen Spulen des Moduls ein gemeinsamer Stromsensor zugeordnet sein, wobei der Stromsensor zeitlich sequentiell den Spulen des Moduls zugeordnet werden kann. Durch einen solchen zeitlichen Multiplexansatz kann ermittelt werden, in welcher Spule des Moduls die Spannung induziert wurde. Jede Sendespule kann bspw. auf Basis des jeweiligen Signals eine Zeitdauer aussenden, die der Summe der Zeitdauern entspricht, die der Stromsensor den Spulen zugeordnet wird. Dies muss für jede Sendespule wiederholt werden, um identifizieren zu können, welche Sendespule an welcher Spule eine Spannung induziert hat.

Insbesondere erfolgt eine Frequenzanalyse, die das festgestellte bzw. ermittelte Strom- oder Spannungssignal in den Frequenzraum umwandelt. Wie oben beschrieben wird eine Veränderung des Stroms oder der Spannung über die Zeit gemessen. Wird nun in allen Spulen gleichzeitig ein Signal mit einem Wechselanteil eingeprägt, ist das Signal eine Addition der Strom- oder Spannungsveränderungen der unterschiedlichen Signale über die Zeit. Um zu bestimmen, welcher Änderungsanteil auf welche Sendespule zurückzuführen ist, wird das ermittelte Signal über die Zeit in den Frequenzraum umgewandelt. Im Rahmen der Frequenzanalyse kann vor allem eine schnelle Fouriertransformation, eine diskrete Fourier-Transformation und/oder ein Goertzel-Filter eingesetzt werden.

Dabei wird insbesondere ein Abtastzeitraum gewählt, der vor allem so gewählt ist, dass sich die unterschiedlichen Frequenzen beziehungsweise Frequenzkanäle, nicht beeinflussen. Insbesondere werden die orthogonalen Frequenzen bzw. orthogonalen Signale so gewählt, dass diese bzw. die entsprechenden Frequenzen im Frequenzbereich äquidistant zueinander sind. In anderen Worten wird ein Frequenzraster bestimmt, das den Abstand benachbarten Frequenzen zueinander definiert. Diesem Frequenzraster entspricht im Zeitraum einer Abtastzeitrate, bzw. ein Zeitraster, der zum Abtasten eingesetzt werden kann. Beispielsweise entspricht ein Frequenzraster beziehungsweise ein Frequenzunterschied von 10 kHz zwischen benachbarten Frequenzen einem Abtastzeitraum von 100 μs. Beispielsweise kann der Abtastzeitraum zwischen 1 μs und 500 μs, vorzugsweise zwischen 5 μs und 200 μs, betragen. Für jede Spule kann das festgestellte Signal über die Zeit mit dem Abtastzeitraum abgetastet werden, um den Anteil der Frequenzen zu bestimmen und so die Amplitude über die einzelnen Frequenzen zu sehen. Insbesondere sind im Frequenzraum Bins definiert, die äquidistant sind und dem Frequenzraster entsprechen. An den entsprechenden Bins kann nun festgestellt werden, ob unter der entsprechenden Frequenz eine induzierte Spannung induziert wurde. Da den Sendespulen eine Frequenz zugeordnet ist, sieht man, welcher Anteil auf das Signal welcher Sendespule zurückzuführen ist.

Ferner können die Signale einen Code umfassen, wobei sich die Codes unterscheiden. Vorzugsweise sind die Codes mathematisch orthogonal, um eine optimale Unterscheidbarkeit der Signale zu ermöglichen. Dabei können die Signale die gleiche Frequenz aufweisen. Vorzugsweise können die Signale moduliert sein, beispielsweise amplitudenmoduliert, wobei aus der entsprechenden Modulation auf die entsprechende Sendespule, die eine bestimmte Spannung induziert hat, geschlossen werden kann. Es kann beispielsweise ein Code-Multiplex-Verfahren, eingesetzt werden, sodass alle Spulen auf der gleichen Frequenz aussenden können. Dabei kann das Verfahren ein Demodulieren des ermittelten Stroms oder der Spannung umfassen, um auf die Modulation und somit die Sendespule zu schließen.

Aus der ermittelten induzierten Spannung beziehungsweise den ermittelten induzierten Spannungen der verschiedenen Spulen kann auf eine relative Position zwischen Spulen unterschiedlicher Module, bspw. dem ersten und dem zweiten Modul, geschlossen werden. Vor allem kann aus der ermittelten induzierten Spannung beziehungsweise aus den ermittelten induzierten Spannungen auf eine direkte Nachbarschaft zwischen primärseitigen Spulen unterschiedlicher Module, bspw. dem ersten und dem zweiten Modul, geschlossen werden.

Insbesondere ermittelt das Verfahren die stärkste induzierte Spannung zwischen Spulen unterschiedlicher Module und schließt auf Basis dieser auf eine direkte Nachbarschaft zwischen diesen Spulen. In anderen Worten kann geschlossen werden, dass die Seiten des Moduls, an der diese Spulen angeordnet sind, direkt aneinandergrenzen müssen.

Insbesondere wird berücksichtigt, welche Spulen welchem Modul zugeordnet sind. So können Spulen aufgrund der Tatsache, dass sie zusammen mit anderen Spulen einem Modul zugeordnet sind und somit zwangsläufig in einer gewissen Nähe zueinander angeordnet sind, ebenfalls eine induzierte Spannung in einer Spule desselben Moduls auslösen. Solche induzierten Spannungen können ignoriert werden. In anderen Worten können Spannungen von Spulen ignoriert werden, die von einer Sendespule desselben Moduls erzeugt werden. Auch ein entsprechender Eigenanteil kann ignoriert werden. So wird hier eine Spannung bezeichnet, die in einer Spule gemessen wird, wobei genau diese Spule das Signal erzeugt hat und somit Sendespule ist. Die Spule misst somit ihr eigenes Signal als Eigenanteil.

Das vorliegende Verfahren berücksichtigt die obige Information, da vorzugsweise die relative Position zwischen Spulen unterschiedlicher Module und somit die Anordnung der Module zueinander bestimmt werden soll. Aus der bekannten Position der Spulen eines Moduls zueinander kann folglich auch auf weitere relative Positionen aller anderen Spulen geschlossen werden.

Insbesondere kann aus der Amplitude der induzierten Spannung auf einen Abstand zwischen den Spulen geschlossen werden. Die Amplitude der Spannung ist abhängig ist von der Größe und von dem Abstand der Spulen. Da die Größe der Spulen bekannt ist, kann ein Rückschluss auf den Abstand erfolgen. Dabei können verschiedene Schwellwerte definiert werden, die auf verschiedene Distanzwerte schließen lassen.

Insgesamt wird somit ein Verfahren vorgeschlagen, das effizient und kosten- und Materialsparend eine Bestimmung relativer Positionen unterschiedlicher Module ermöglicht. Auch kann die Anordnung überwacht werden. Eine genaue Montage der Spulen bzw. Modulen oder das Vorsehen einer dedizierten Schnittstelle aus dem Stand der Technik ist daher nicht notwendig.

Insbesondere kann sich das Verfahren auf mehr als zwei Module, vor allem drei, vier oder fünf, Module beziehen. Es weist somit jedes Modul mindestens eine Spule auf, wobei ein oben beschriebenes Verfahren in Bezug auf diese mindestens eine Spule durchgeführt werden kann.

In einem weiteren Aspekt befasst sich die Erfindung mit einer Vorrichtung zur kontaktlosen Energieübertragung, wobei die Vorrichtung mindestens ein erstes primärseitiges Modul und ein zweites primärseitiges Modul umfasst, wobei das erste und das zweite Modul jeweils mindestens eine Spule umfassen. Die Vorrichtung umfasst eine Erzeugungseinheit zum Erzeugen eines Signals mit einem Wechselanteil in mindestens einer Spule des ersten Moduls zur Induktion einer Spannung in mindestens einer Spule des zweiten Moduls und ein Feststellmittel bzw. Detektionsmittel zum Feststellen bzw. Detektieren der induzierten Spannung in der Spule des zweiten Moduls. Dabei kann die Vorrichtung, wie oben beschrieben ausgebildet sein. Ferner ist die Vorrichtung zum Durchführen eines oben beschriebenen Verfahrens ausgebildet.

Eine Erzeugungseinheit kann hinsichtlich jeder Spule vorgesehen sein oder eine jeweilige Erzeugungseinheit kann jedem Modul zugeordnet sein und bspw. zeitlich nacheinander den einzelnen Spulen zugeordnet werden. Zur Erzeugung des mindestens einen Signals kann vor allem mindestens ein Transformator eingesetzt werden. Insbesondere kann jeder Spule ein Transformator zugeordnet sein. Der Transformator kann das Signal induktiv zu der Spule, die das Signal aussenden soll, übertragen.

Alternativ kann die Vorrichtung einen Konverter umfassen, der zur Erzeugung des mindestens einen Signals beeinflusst werden kann, wobei dies besonders vorteilhaft ist, da dann kein separates Mittel zur Erzeugung notwendig ist. Im Detail werden Schalter des Konverters gezielt gesteuert, um das mindestens eine Signal zu erzeugen. Der Konverter dient vorzugsweise zur Umwandlung der Nutzenergie, die übertragen werden soll. Dies geschieht durch gezielte Steuerung der Schalter. Nun können die Schalter so gesteuert werden, dass eine Spule das Signal aussendet.

Bei den Spulen handelt es sich insbesondere um die Energieübertragungsspulen der Vorrichtung. Bei dem Stromsensor handelt es sich insbesondere um einen Stromsensor, der ohnehin am Inverterausgang eingesetzt wird, um einen Überstrom am Inverter zu verhindern beziehungsweise dessen Leistungen zu messen. Es wird somit mit minimalem oder ohne zusätzlichen Materialaufwand das oben beschriebene Verfahren ermöglicht.

Insbesondere kann sich die mindestens eine Spule der Module in Dickenrichtung der Module über mindestens 20 %, insbesondere mindestens 50 %, der Dicke an einer Stelle der Module erstrecken. Dies dient dazu die magnetische Kopplung zu benachbarten Spulen zu erhöhen. Somit kann die magnetische Kopplung durch eine Formgebung der Spule verbessert werden. Die primärseitigen Module werden insbesondere derart benachbart zueinander angeordnet, dass deren Stirnseiten gegenüberstehen. Sie werden vorzugsweise aneinander angrenzend angeordnet.

Ferner kann die Vorrichtung eine Steuereinheit umfassen, die das Erzeugen der Signale steuert. Auch kann die Vorrichtung eine Auswerteeinheit aufweisen, die dazu ausgebildet ist die relative Position zwischen der Module festzustellen, bspw. die gemessenen Ströme oder Spannungen auszuwerten, beziehungsweise eine Frequenzanalyse durchzuführen, und darauf auf die Anordnung zu schließen.

Insbesondere kann die Vorrichtung mehr als zwei Module, vor allem drei, vier oder fünf, Module umfassen, die jeweils mindestens eine Spule umfassen.

Es zeigen in rein schematischer Darstellung:

- Figur 1: ein Verfahrensschema eines Verfahrens zum Bestimmen einer relativen Position mindestens eines zweiten primärseitigen Moduls zu einem ersten primärseitigen Modul;
- Figur 2: eine Draufsicht auf Module einer Vorrichtung zur kontaktlosen Energieübertragung;
- Figur 3: ein Querschnitt entlang der Schnittlinie A-A;
- Figur 4: ein zeitlich sequentielles Aktivierungsschema der Spulen der Figur 2 von Signalen mit einem Wechselanteil;
- Figur 5: einen Frequenzplan der Spulen der Figur 2 bei gleichzeitigem Erzeugen eines Signals mit Wechselanteil
- Figur 6: einen Stromverlauf an einer Spule;
- Figur 7: den Graphen der Figur 6 nach Umwandlung in den Frequenzraum;
- Figur 8: eine Darstellung nach Figur 7 für eine andere Spule, und
- Figur 9: eine Vorrichtung zur Energieübertragung.

Figur 1 zeigt ein Verfahrensschema eines Verfahrens 100 zum Bestimmen einer relativen Position mindestens eines zweiten primärseitigen Moduls zu einem ersten primärseitigen Modul einer Vorrichtung zur kontaktlosen Energieübertragung.

Das Verfahren 100 umfasst ein Erzeugen 101 eines Signals mit einem Wechselanteil an der mindestens einen Spule des ersten Moduls. Vor allem wird ein entsprechendes Signal an jeder Spule des ersten und des zweiten Moduls erzeugt 101a. Die entsprechenden Signale können zeitlich sequentiell erzeugt werden 101b oder gleichzeitig erzeugt werden 101c. In Folge wird in mindestens einer Spule des zweiten Moduls eine Spannung induziert 102 und festgestellt 103. Vor allem wird in jeder Spule des ersten und den zweiten Moduls eine Spannung festgestellt 103a, und zwar wird diese insbesondere indirekt festgestellt 103b über eine Messung 103c des Stroms. Vor allem wird der Strom an einem Ausgang eines Inverters eines der Spule zugeordneten Inverters gemessen 103c.

Beispielsweise kann ein Stromsensor zeitlich sequentiell den Spulen eines Moduls zugeordnet werden 103d.

Es kann nun basierend auf den festgestellten Spannungen eine relative Position zwischen mindestens einer Spule des ersten Moduls und einer Spule des zweiten Moduls ermittelt werden 104. Vor allem kann eine direkte Nachbarschaft ermittelt werden 105. Dabei wird vor allem eine Zuordnung von Spulen zu einem Modul und/oder eine relative Position von Spulen desselben Moduls berücksichtigt 106.

Figur 2 zeigt eine Draufsicht auf Module einer Vorrichtung 10 zur kontaktlosen Energieübertragung. Im Detail ist ein erstes primärseitiges Modul 11 mit den Spulen 11a, 11b, 11c und 11d, ein zweites primärseitiges Modul 12 mit den Spulen 12a, 12b, 12c und 12d, und ein drittes primärseitiges Modul 13 mit den Spulen 13a, 13b, 13c und 13d gezeigt. Dabei grenzt das erste Modul 11 an das zweite Modul 12, wobei das zweite Modul 12 ferner an das dritte Modul 13 grenzt, sodass die Spulen 11c und 12b und die Spulen 12d und 13a jeweils in direkter Nachbarschaft zueinander sind.

In Figur 3 ist ein Querschnitt an der Schnittlinie A-A der Figur 2 gezeigt. Und zwar führt der Querschnitt durch das erste primärseitige Modul 11 und das zweite primärseitige Modul 12 und die Spulen 11b, 11c, 12b und 12c. In Figur 3 ist zu sehen, wie die Spulen an der Stirnseite 21 in Dickenrichtung 20 nach unten gezogen sind und somit zumindest an einer Stelle eine größere Dicke aufzuweisen um somit die magnetische Kopplung zu erhöhen.

In Figur 4 ist ein zeitlich sequentielles Aktivierungsschema von Signalen mit einem Wechselanteil zu sehen. In der linken Spalte sind die unterschiedlichen Spulen dargestellt, in denen ein Signal erzeugt wird, in anderen Worten, die aktiviert werden. Dabei werden diese nach der Zeit 32 nacheinander aktiviert. Es sendet somit erst Spule 11a aus, dann Spule 11b, dann Spule 11c etc. In der obersten Zeile sind hingegen die unterschiedlichen Spulen gezeigt werden, in denen eine Spannung induziert wird. Es wird dabei Wissen über eine Zuordnung von Spulen zu einem Modul berücksichtigt, und zwar sind die Felder ausgegraut (schraffiert), in denen Spulen eine Spannung feststellen, die von einer Sendespule desselben Moduls erzeugt wird. Dies trifft bspw. in Bezug auf das erste primärseitige Modul 11 bei einer Aktivierung der Spule 11a auf eine induzierte Spannung in den Spule 11a, 11b, 11c und 11d zu. Entsprechende Spannungen werden für die weitere Auswertung ignoriert.

Mit einer "1" sind induzierte Spannungen gekennzeichnet. In Figur 4 ist deutlich zu sehen, wie das Erzeugen eines Signals in der Spule 11c eine induzierte Spannung in der Spule 12b auslöst. Umgekehrt löst ein Erzeugen eines Signals in der Spule 12b eine Spannung in der Spule 11c aus. Auch löst ein Erzeugen eines entsprechenden Signals in der Spule 12d eine Spannung in der Spule 13a aus und umgekehrt. Es kann somit auf eine direkte Nachbarschaft der Spulen 11c und 12c und auf eine direkte Nachbarschaft der Spulen 12d und 13a geschlossen werden, sowie dies in Figur 3 dargestellt ist.

Figur 5 zeigt einen Frequenzplan der Spulen der Figur 2 bei gleichzeitigem Erzeugen eines Signals mit Wechselanteil. In der oberen Zeile sind die unterschiedlichen Spulen der verschiedenen Module dargestellt, während in der unteren Zeile eine zugeordnete Frequenz des auszusendenden Signals in Kilohertz beispielhaft dargestellt ist. Deutlich ist zu sehen, dass bei diesem Beispiel eine Schrittweite, sogenannt ein Frequenzraster, von 10 kHz vorliegt. In anderen Worten sind die Frequenzen ein Vielfaches von 10 kHz.

Es wird nun an jeder Spule der Strom und somit die induzierte Spannung festgestellt, die sich aus unterschiedlichen Anteilen, die auf den unterschiedlichen Signalen der Spulen zusammensetzt. Dies ist in Figur 6 beispielhaft für die Spule 11a zu sehen. Hier ist der gemessen Strom 33 über die Zeit 32 dargestellt. Besteht keine magnetische Kopplung zwischen zwei Spulen wird keine Spannung festgellt.

Durch eine Umwandlung des Graphen der Figur 6 in den Frequenzbereich erhält man nun Figur 7 bezüglich der Spule 11a des ersten primärseitigen Moduls 11. Es ist die Amplitude 31 über die Frequenz 30 gezeigt. Deutlich ist zu sehen, dass ein maximaler Signalanteil bei der Frequenz festgestellt wird, die der Spule selbst zugeordnet ist, da bezüglich der Spule auch das eigene Signale gemessen wird, aus dem jedoch keine Aussage über die Anordnung unterschiedlicher Spulen getroffen werden kann. Ein solcher Eigenanteil wird somit ignoriert. Die anderweitig induzierten Spannungen / Ströme liegen unterhalb einer Schwelle, sodass diese ignoriert werden.

Für Spule 12b ist das gleiche in Figur 8 dargestellt. Deutlich ist zu sehen, wie das maximale Signal erneut bei der eigenen Signalfrequenz dargestellt ist, die die Spule selbst betrifft, jedoch auch ein deutlich hohes Signal zu sehen, bei der Frequenz, die der Spule 11c zugeordnet ist. Daraus kann die Sendespule als Spule 11c identifiziert werden und somit auf eine räumliche Nähe zwischen den Spulen 12b und 11c geschlossen werden.

Figur 9 zeigt rein schematisch eine Vorrichtung 10 zur Energieübertragung mit einem ersten Modul 11, einem zweiten Modul 12 und einem dritten Modul 13, sowie einer jeweiligen Erzeugungseinheit 14 und einer jeweiligen Feststelleinheit 15.

Bezugszeichenliste

| | |
|---|---|
| 100 | Verfahren zum Bestimmen einer relativen Position mindestens eines zweiten primärseitigen Moduls zu einem ersten primärseitigen Modul einer Vorrichtung zur kontaktlosen Energieübertragung |
| 101 | Erzeugen eines Signals mit einem Wechselanteil in der Spule des ersten Moduls |
| 101a | Erzeugen eines Signals mit einem Wechselanteil in jeder Spule des ersten und des zweiten Moduls |
| 101b | zeitlich sequentielles Erzeugen von Signalen |
| 101c | gleichzeitiges Erzeugen von Signalen |
| 102 | Induktion einer Spannung in der Spule des zweiten Moduls |
| 103 | Feststellen der induzierten Spannung in der Spule des zweiten Moduls |
| 103a | Feststellen einer in jeder Spule des ersten und des zweiten Moduls induzierten Spannung |
| 103b | indirektes Feststellen der Spannung mittels Messung des Stroms |
| 103c | Messung des Stroms an einem Ausgang eines der Spule zugeordneten Inverters |
| 103d | zeitlich sequentielle Zuordnung eines Stromsensors zu den Spulen eines Moduls |
| 104 | Ermitteln einer relativen Position zwischen mindestens einer Spule des ersten Moduls und einer |

| | |
|---|---|
| | Spule des zweiten Moduls |
| 105 | Ermitteln einer direkten Nachbarschaft zwischen mindestens einer Spule des ersten Moduls und einer Spule des zweiten Moduls |
| 106 | Berücksichtigung von Wissen über eine Zuordnung von Spulen zu einem Modul und/oder über eine relative Position von Spulen desselben Moduls |
| 10 | Vorrichtung zur kontaktlosen Energieübertragung |
| 11 | erstes primärseitiges Modul |
| 11a, 11b, 11c, 11d | Spule des ersten Moduls |
| 12 | zweites primärseitiges Modul |
| 12a, 12b, 12c, 12d | Spule des zweiten Moduls |
| 13 | drittes primärseitiges Modul |
| 13a, 13b, 13c, 13d | Spule des dritten Moduls |
| 14 | Erzeugungseinheit |
| 15 | Feststelleinheit |

| | |
|---|---|
| 20 | Dickenrichtung |
| 21 | Stirnseite |

| | |
|---|---|
| 30 | Frequenz |
| 31 | Amplitude |
| 32 | Zeit |
| 33 | Strom |

**Patentansprüche**

1. Verfahren (100) zum Bestimmen einer relativen Position mindestens eines zweiten primärseitigen Moduls (12) zu einem ersten primärseitigen Modul (11) einer Vorrichtung (10) zur kontaktlosen Energieübertragung,

    wobei das erste Modul (11) und das zweite Modul (12) jeweils mindestens eine Spule umfassen,
    **dadurch gekennzeichnet, dass**
    das Verfahren (100) ein Erzeugen (101) eines Signals mit einem Wechselanteil in mindestens einer Spule des ersten Moduls (11) zur Induktion (102) einer Spannung in mindestens einer Spule des zweiten Moduls (12) und ein Feststellen (103) der induzierten Spannung in der Spule des zweiten Moduls umfasst

2. Verfahren (100) nach Anspruch 1,
    **dadurch gekennzeichnet, dass**

    das Verfahren (100) ein Erzeugen (101a) eines jeweiligen Signals mit einem Wechselanteil in jeder Spule des ersten Moduls (11) und des zweiten Moduls (12) umfasst,
    wobei das Verfahren (100) ein Feststellen (103a) einer in jeder Spule des ersten und des zweiten Moduls induzierten Spannung umfasst.

3. Verfahren (100) nach Anspruch 1 oder 2,
    **dadurch gekennzeichnet, dass**
    die Signale zeitlich sequentiell erzeugt werden (101b).

4. Verfahren (100) nach Anspruch 1 oder 2,
    **dadurch gekennzeichnet, dass**

    die Signale gleichzeitig erzeugt werden (101c),
    wobei sich die Signale unterscheiden.

5. Verfahren (100) nach Anspruch 4,
    **dadurch gekennzeichnet, dass**

    die Signale Frequenzen aufweisen,
    wobei sich die Frequenzen unterscheiden.

6. Verfahren (100) nach Anspruch 5,
**dadurch gekennzeichnet, dass**
die Frequenzen orthogonal zueinander sind.

7. Verfahren (100) nach Anspruch 4,
**dadurch gekennzeichnet, dass**
die Signale einen Code beinhalten, wobei die Codes unterscheidbar sind.

8. Verfahren (100) nach einem der vorangehenden Ansprüche,
**dadurch gekennzeichnet, dass**
die Spannung in einer Spule indirekt durch Messung (103c) eines Stroms mittels eines Stromsensors festgestellt wird (103b).

9. Verfahren (100) nach Anspruch 8,
**dadurch gekennzeichnet, dass**

   jeder Spule ein Inverter zugeordnet ist,
   wobei mittels des Stromsensors der Stroms an einem Ausgang des Inverters der jeweiligen Spule gemessen wird.

10. Verfahren (100) nach Anspruch 8,
**dadurch gekennzeichnet, dass**

   jedem Modul ein Stromsensor zugeordnet ist,
   wobei jedes Modul mehrere Spulen umfasst,
   wobei der Stromsensor eines Moduls zeitlich sequentiell den Spulen des Moduls zugeordnet wird (103d).

11. Verfahren (100) nach einem der vorangehenden Ansprüche, **dadurch gekennzeichnet, dass**
basierend auf der induzierten Spannung eine relative Position zwischen mindestens einer Spule des ersten Moduls (11) und mindestens einer Spule des zweiten Moduls (12) ermittelt wird (104).

12. Verfahren (100) nach einem der vorangehenden Ansprüche,
**dadurch gekennzeichnet, dass**
basierend auf der induzierten Spannung eine direkte Nachbarschaft zwischen mindestens einer Spule des ersten Moduls (11) und mindestens einer Spule des zweiten Moduls (12) ermittelt wird (105).

13. Vorrichtung (10) zur kontaktlosen Energieübertragung,
**dadurch gekennzeichnet, dass**

   die Vorrichtung (10) mindestens ein erstes primärseitiges Modul (11) und ein zweites primärseitiges Modul (12) umfasst,
   wobei das erste Modul (11) und das zweite Modul (12) jeweils mindestens eine Spule umfassen,
   wobei die Vorrichtung (10) eine Erzeugungseinheit (14) zum Erzeugen (101) eines Signals mit einem Wechselanteil in mindestens einer Spule des ersten Moduls (11) zur Induktion (102) einer Spannung in mindestens einer Spule des zweiten Moduls (12) und eine Feststelleinheit zum Feststellen (103) der induzierten Spannung in der Spule des zweiten Moduls (12) umfasst.

14. Vorrichtung (10) nach Anspruch 13,
**dadurch gekennzeichnet, dass**
es sich bei der Feststelleinheit um einen Stromsensor an einem Ausgang eines Inverters der Spule handelt.

15. Vorrichtung (10) nach einem der Ansprüche 13 oder 14,
**dadurch gekennzeichnet, dass**
die mindestens eine Spule der Module sich zumindest an einer Stelle in Dickenrichtung (20) des Moduls über mindestens 20 % der Dicke des Moduls erstreckt.

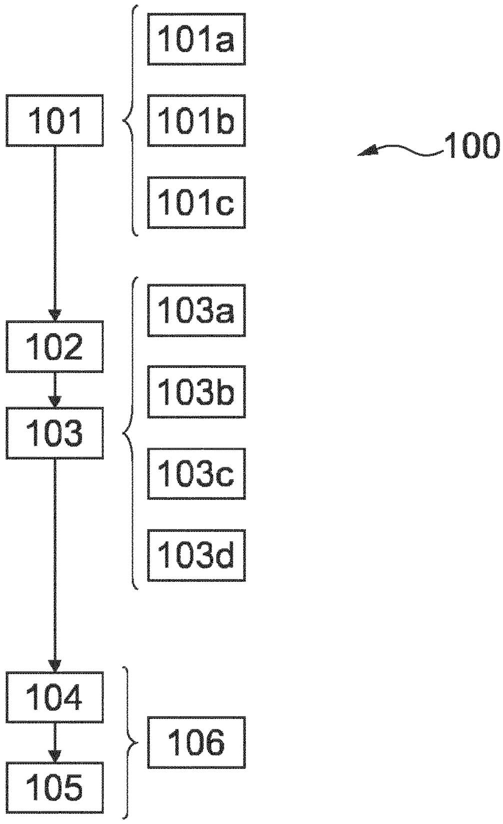


Fig. 1

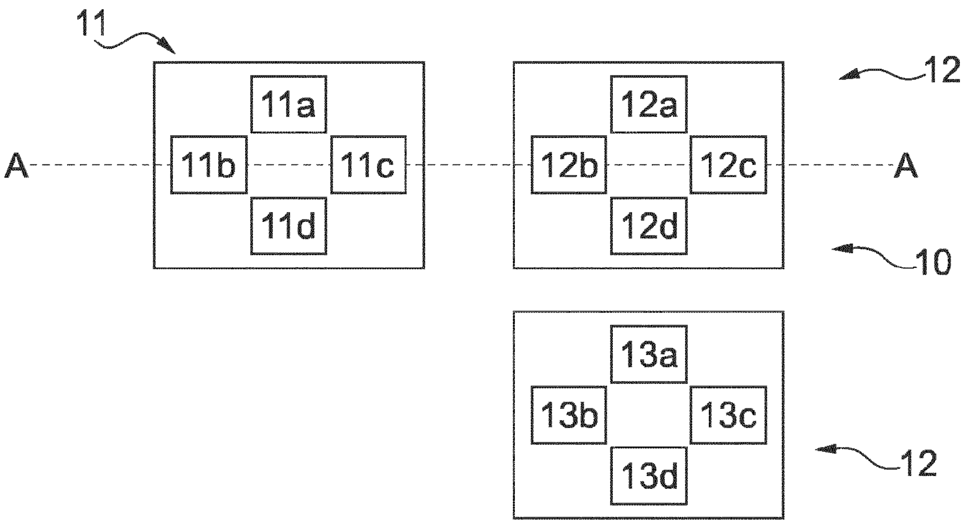


Fig. 2

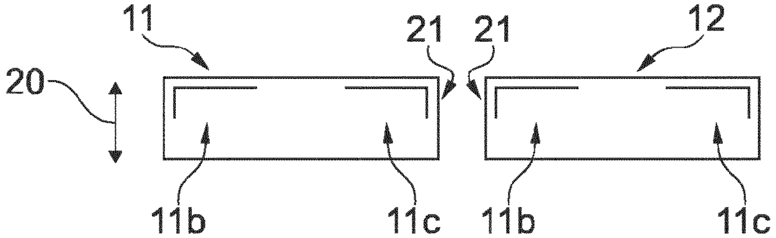


Fig. 3

32

| | 11a | 11b | 11c | 11d | 12a | 12b | 12c | 12d | 13a | 13b | 13c | 13d |
|---|---|---|---|---|---|---|---|---|---|---|---|---|
| 11a | | | | | | | | | | | | |
| 11b | | | | | | | | | | | | |
| 11c | | | | | | 1 | | | | | | |
| 11d | | | | | | | | | | | | |
| 12a | | | | | | | | | | | | |
| 12b | | | 1 | | | | | | | | | |
| 12c | | | | | | | | | | | | |
| 12d | | | | | | | | | 1 | | | |
| 13a | | | | | | | | 1 | | | | |
| 13b | | | | | | | | | | | | |
| 13c | | | | | | | | | | | | |
| 13d | | | | | | | | | | | | |

Fig. 4

| 11a | 11b | 11c | 11d | 12a | 12b | 12c | 12d | 13a | 13b | 13c | 13d |
|---|---|---|---|---|---|---|---|---|---|---|---|
| 100 | 110 | 120 | 130 | 140 | 150 | 160 | 170 | 180 | 190 | 200 | 210 |

Fig. 5

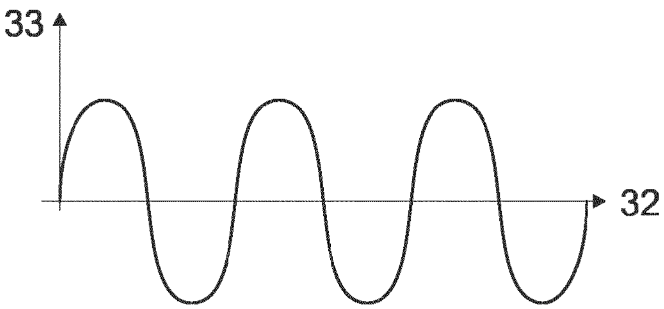


Fig. 6

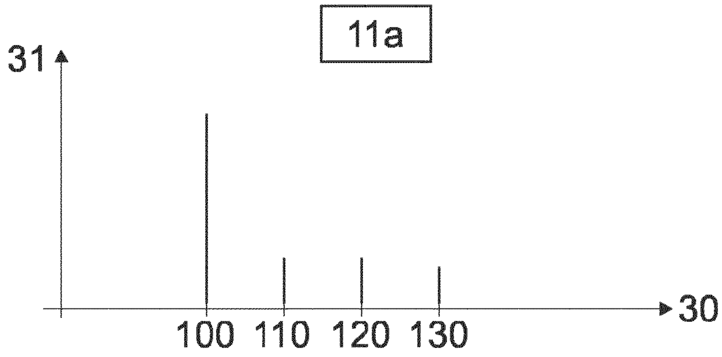


Fig. 7

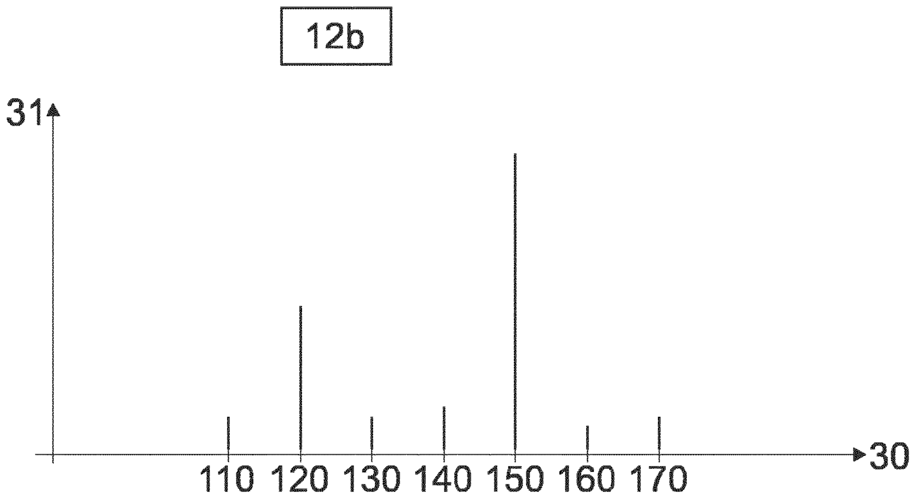


Fig. 8

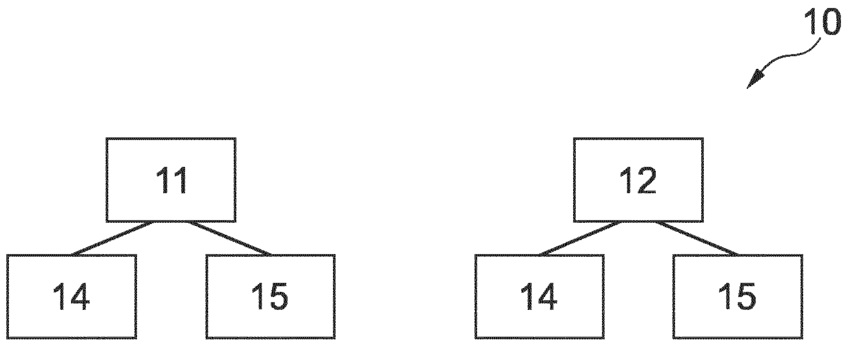


Fig. 9